# EUROPEAN PATENT APPLICATION

(11) **EP 1 237 011 A1**
(43) Date of publication of application: **04.09.2002**
(21) Application number: 02004695.9
(22) Date of filing: 28.02.2002
(51) Int. Cl.: G01S 17/46, G01S 7/486

(54) **Optoelectronic distance measurement device**

(30) Priority: 02.03.2001 IT BO010114
(71) Applicant: Datasensor S.p.A., 40050 Monte San Pietro (BO) (IT)
(72) Inventor: Giovannardi, Fabio, 40129 Bologna (IT)
(74) Representative: Jorio, Paolo

(57) **Abstract**

An optoelectronic distance measurement device (1) comprising a light phototransmitter (3) adapted to transmit a beam of light pulses in a predetermined direction; a PSD photoreceiver (4) adapted to receive a beam of light pulses reflected by an object (2) and to supply as output a first and a second position signal (PCS₁, POS₂) indicative of the distance of the object (2) from the distance measurement device (1); an unbalancing circuit (5) comprising a resistor (13) having a resistance (R) variable as a function of a control signal (COM); the unbalancing circuit (5) being adapted alternatively to amplify/attenuate the first and the second position signal (POS₁, POS₂) by varying the resistance (R) of the variable resistor as a function of the control signal (COM); a processing unit (6) adapted to supply as output the control signal (COM) in order sequentially to vary the value of the resistance (R) of the resistor (13) until a predetermined relationship is reached between the first and the second position signal (POS₁, POS₂); the processing unit (6) being adapted to supply as output a signal (MIS) indicating the distance (D) of the object (2), obtained as a function of the value of the resistance (R) of the resistor (13) that has caused the predetermined relationship between the first and the second position signals (POS₁, POS₂) to be reached.

## Description

The present invention relates to an optoelectronic distance measurement device.

As is known, the optoelectronic distance measurement devices currently known are provided with a phototransmitter adapted to transmit a beam of light pulses in a specific direction for the detection of objects, a photoreceiver of the PSD (Position Sensitive Device) type adapted partially to receive, via an optical triangulation system, the beam of light pulses reflected by an object in order to supply as output a first and a second electrical position signal, whose values together have a correlation with the position of the beam of pulses incident on a surface of the photoreceiver.

The above-mentioned distance measurement devices are further provided with a processing circuit which receives as input the first and second electrical position signals and is adapted to supply as output a signal calculated as a function of the ratio between the above-mentioned position signals and indicating the distance of the object.

These distance measurement devices have the drawback that the processing circuit described above is particularly complex with the result that these distance measurement devices have high production costs.

The object of the present invention is to provide a distance measurement device of the optoelectronic type free from the drawbacks described above.

The present invention therefore relates to a distance measurement device as described in claim 1.

The present invention will be described below with reference to the accompanying drawings which show a nonlimiting embodiment thereof and in which:
Fig. 1 is a diagram of a distance measurement device of the present invention;
Fig. 2 is a flow diagram relating to the operation of the distance measurement device shown in Fig. 1.

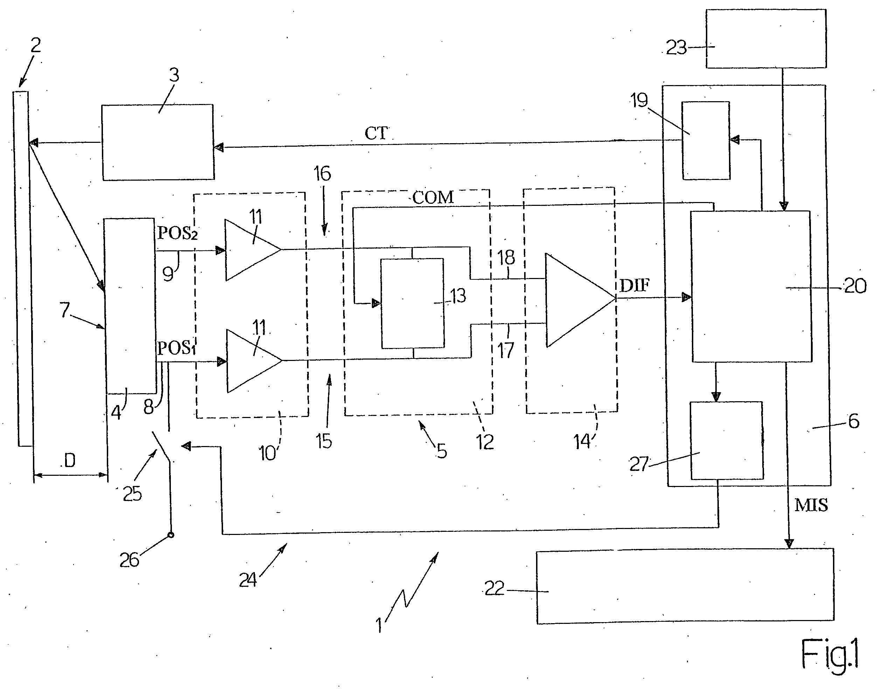

In Fig. 1, an optoelectronic distance measurement device is shown overall by 1 and is adapted to measure the distance D of a generic object 2 with respect to this. distance measurement device 1.

The distance measurement device 1 comprises an optoelectronic light transmission unit, in this case a phototransmitter 3, which is adapted to generate as output, in a predetermined direction and as a function of a control signal CT received as input, a light beam comprising a sequence of light pulses, and an optoelectronic light reception unit, in this case a photoreceiver 4, which is adapted to receive, via an optical triangulation system, the light beam reflected by the object 2 in order to supply as output a first and a second electrical position signal POS₁, POS₂, whose values, together, have a correlation with the distance D of the object 2 measured with respect to the distance measurement device 1.

The distance measurement device 1 further comprises an unbalancing circuit 5 which is connected downstream of the photoreceiver 4 and is adapted to process the first and the second electrical position signal POS₁, POS₂ supplied by the photoreceiver in order to supply as output a differential signal DIF having a value indicative of the distance D of the object 2, and a processing unit 6 which is adapted to receive and process, as will be described below, the differential signal DIF supplied by the unbalancing circuit 5 in order to determine the distance D of the object 2 with respect to the distance measurement device 1.

The photoreceiver 4 is advantageously formed by a sensor of known type, generally indicated by the acronym "PSD" (Position Sensitive Device) which has a surface 7 sensitive to the position of the incident light beam and comprises a first and a second output terminal 8, 9.

The photoreceiver 4 is more particularly adapted to supply, to the first and second terminal 8, 9, the first and the second electrical position signal POS₁, POS₂, whose values together have a correlation with the position of incidence of the light beam reflected by the object 2 on the surface 7.

The photoreceiver 4 is more particularly positioned with respect to the phototransmitter 3 so as to provide a precise optical triangulation of the light beam transmitted and received, in this way defining an unequivocal relationship between the position of the point of incidence of the light beam on the surface 7 of the photoreceiver 4 and the distance D of the object 2 measured with respect to the distance measurement device 1.

This relationship thus provides a correlation between the distance D of the object 2 from the distance measurement device 1 and the values of the first and second position signals POS₁, POS₂.

In Fig. 1, the unbalancing circuit 5 comprises an amplification stage 10 which may advantageously be formed for instance by a pair of amplification circuits 11 (shown in diagram form) adapted to receive as input the first and the second position signals POS₁, POS₂ respectively and to supply as output an amplification of these signals, and a regulation stage 12 connected to the photoreceiver 4 via the amplification stage 10 and adapted to unbalance, as a function of a control signal COM received as input, the amplification of the first and/or the second position signal POS₁, POS₂.

The regulation stage 12 more particularly comprises a variable resistor 13 of known type which may be formed by a digital trimmer whose resistance value R is regulated by means of the control signal COM received as input from the regulation device 12.

In other words, the regulation stage 12 is adapted to vary, as a function of the control signal COM, the resistance R of the variable resistor 13 thereby determining a controlled unbalancing of the amplification of the first and the second position signals POS₁, POS₂.

The unbalancing circuit 5 further comprises a differential stage 14 which is connected downstream of the regulation stage 12 from which it receives the first and second position signals POS₁, POS₂, and is adapted to supply as output the differential signal DIF which is determined by the amplification of the difference between the first and the second position signals POS₁, POS₂.

It will be appreciated from the above description that the amplification stage 10 and the regulation stage. 12 define a first and a second amplification "channel" 15, 16 which connect the input terminals of the differential stage 14 to the output terminals of the photoreceiver 4, i.e. they connect the first and the second output terminal 8, 9 of the photoreceiver 4 to a first and respectively a second input terminal 17, 18 of the differential stage 14 and have a respective gain that can be controlled by means of the control signal COM.

The first and second terminals 17, 18 of the differential stage 14 receive the first and the second position signals POS₁, POS₂, appropriately unbalanced by the regulation stage 12, and supply the processing device 6 with the differential signal DIF.

The processing device 6 comprises a synchronisation unit 19 adapted to generate the control signal CT which controls the transmission of the light pulses by the phototransmitter 3 and a central control unit 20 which is adapted to receive as input the differential signal DIF and to supply as output the signal COM by means of which it regulates the resistance R of the variable resistor 13, and a signal MIS indicating the measurement of the distance D detected.

The central control unit 20 is more particularly able to supply as output the measurement signal MIS when a predetermined circuit conditions occurs, which is satisfied when the differential signal DIF has a predetermined value DIFₒ, for instance a voltage and/or current value substantially equal to zero (DIF=DIFₒ=0).

The central control unit 20 is more particularly adapted to reach the above-mentioned predetermined circuit condition through a closed loop control in which it carries out, as a function of the value of the differential signal DIF, a variation of the resistance R of the variable resistor 13, which causes a controlled unbalancing of the amplifications present in the two amplification channels 15, 16 and therefore a controlled variation of the first and second position signals POS₁, POS₂ input with respect to the differential stage 14.

The central control unit 20, once the above-mentioned predetermined circuit condition has been reached, is able to receive the measurement signal MIS by means of the value of the resistance R of the resistor 13 which caused the above-mentioned predetermined circuit condition to be reached.

The measurement signal MIS is in particular calculated by means of a circuit function FC(R) stored in a memory (not shown) of the central control unit 20.

A table containing a plurality of digital values defining the circuit function FC(R) is in particular stored in the memory (not shown), making it possible to obtain, for each value of the resistance R of the resistor 13, the measurement signal MIS indicating the distance D of the object 2.

The circuit function FC(R) more particularly defines a bi-univocal association between the value of the distance D of the object 2 and the value of the resistance R of the resistor 13 which enables the predetermined circuit condition to be reached.

The central control unit 20, in addition to carrying out the above-described closed loop control, is adapted to coordinate and control the operations performed by the synchronisation unit 19.

With reference to Fig. 1, the distance measurement device 1 further comprises a display unit 22 of known type, for instance a liquid crystal display, which is adapted to receive the measurement signal MIS from the central control unit 20 in order to display the numerical value of the distance of the object 2 detected, calculated with respect to the distance measurement device 1 itself.

Preferably, but not 'necessarily, the distance measurement device 1 further comprises a control device 23 of known type, for instance a push button, which is adapted to enable a user to actuate the distance measurement device 1.

The control device-23 is in particular connected to the processing unit in order to communicate to the latter an actuation signal encoding a command for the actuation of the distance measurement device 1.

Preferably, but not necessarily, the distance measurement device 1 is provided with a preliminary search circuit 24 adapted to perform a search for the presence/absence of an object 2 with respect to the distance measurement device 1 before the latter performs the detection of the distance of the object 2.

The preliminary search circuit 24 in particular comprises a switch 25 which is connected between the first output terminal 8 of the photoreceiver 4 and a terminal 26 having a predetermined potential V_{RF} (for instance an earth potential V_{RF}=0) and a selection unit 27 which cooperates with the central control unit 20 and is adapted selectively to control the opening/closure of the switch 25 thereby determining the selection of one of the following modes of operation of the distance measurement device 1.

A "measurement" operating mode, in which the distance measurement device 1 is adapted to perform the above-mentioned control of the resistance R of the resistor 13 in order to reach the predetermined circuit condition in which it is able to supply the measurement signal MIS indicating the distance D of the object 2.

An "scanning" operating mode, in which the distance measurement device 1 is able to perform a preliminary search (described in detail below) in order to detect solely the presence or absence of an object 2 irrespective of the distance D of this object.

The central control unit is in particular able to select the "scanning" and "measurement" modes of the distance measurement device 1 by controlling, via the selection unit 27, the closure and respectively the opening of the switch 25.

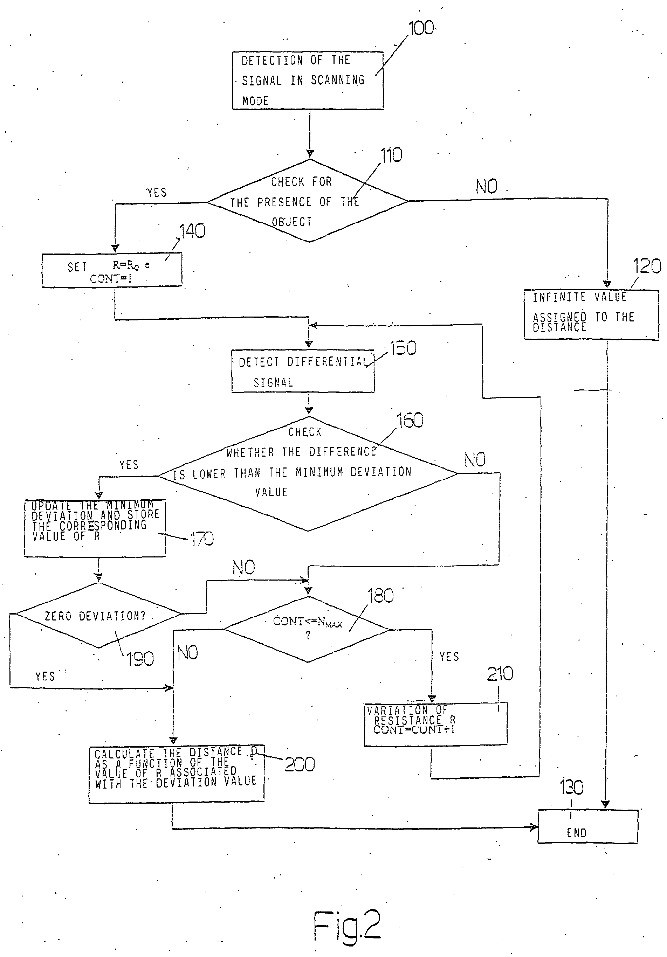

The operation of the distance measurement device 1 will now be described with reference to Fig. 2.

It is assumed initially that the distance measurement device 1 is provided with the preliminary search circuit 24, that it is operational, i.e. has been actuated by a user via the control device 23, that the predetermined value DIFₒ for the achievement of the predetermined circuit condition is substantially equal to zero (DIFₒ=0) and that the distance measurement device 1 is in the "measurement" operating mode, i.e. the switch 25 is open.

In the initial block 100, the distance measurement device 1 controls, via the phototransmitter 3, the transmission of a beam of light pulses.

In the block 100, the distance measurement device 1 controls, via the selection unit 27, the closure of the switch 25 causing the distance measurement device 1 to pass from the "measurement" operating mode to the "scanning" operating mode in which the preliminary search for the object 2 is actuated.

The block 100 is followed by the block 110 in which the distance measurement device 1 verifies whether or not an object 2 is present.

In the "scanning" operating mode, the closure of the switch 25 more particularly causes the exclusion of the first channel 15, i.e. an "imposition" of the predetermined potential V_{RF} (for instance zero) on the first position signal POS₁ in the first input terminal 17 of the differential stage 14; in this condition, the operation of the unbalancing circuit 5 is limited to the amplification of the second channel 16 as the differential signal DIF output from the differential stage 14 corresponds to the difference between the value of the second position signal POS₂ appropriately amplified and the predetermined potential V_{RF}.

In this operating condition, the central control unit 20 is able to establish whether or not an object 2 is present from an analysis of the differential signal DIF.

If no object 2 is present, the position signal POS2 is obviously zero, as the photoreceiver 4 is not excited by light signals. In this case, the central control unit 20 detects a differential signal DIF=0 and the block 110 is followed by the block 120, in which the central control unit 20 assigns an infinite value to the distance D, encoded by the measurement signal MIS. In this case, the display unit shows the user that no objects 2 are present.

The block 120 is followed by the block 130 in which the distance measurement is completed and the distance measurement device 1 returns to standby until it receives a new actuation command from the user.

In the opposite case, i.e. when an object 2 is present, the position signal POS₂ has a value other than zero as the photoreceiver 4 is excited by the light signal reflected by this object 2. In this case the central control unit 20 detects a differential signal DIF of a value other than zero indicating the presence of an object 2.

In this condition, the block 110 is followed by the block 140, in which the central control unit 20 commands, by opening the switch 25, transition from the "scanning" operating mode to the "measurement" operating mode.

In the block 140, the central control unit 20 initialises a counter CONT=1 and controls, by means of the control signal COM, a first variation of the resistance R of the resistor 13, assigning them a predetermined initial value Rₒ for instance equal to the maximum or minimum value of this resistor 13.

The block 140 is followed by the block 150 in which the control unit' 20 detects the value of the differential signal DIF generated, via the reception of a new light pulse converted by the photoreceiver 4 into the respective first and second position signals POS₁ and POS₂.

The block 150 is followed by the block 160 in which the central control unit 20 checks the value of the differential signal DIF.

If the difference between the value of the differential signal DIF detected and the value of the differential signal DIF that satisfies the predetermined circuit condition (DIF=0) is greater than a minimum deviation value, the block 160 is followed by the block 180.

If, however, the difference between the value of the differential signal DIF detected, and the value of the differential signal DIF that satisfies the predetermined circuit condition (DIF=0) is lower than the minimum deviation value, the block 160 is followed by the block 170 in which the central control unit 20 updates the minimum deviation value by assigning it a new value which is obtained from the difference between the value of the differential signal DIF detected, and the value of the differential signal DIF indicating the predetermined circuit condition (DIF=0).

In the block 170, the central control unit 20 stores, moreover, the value of the resistance R of the resistor 13 that has determined the new minimum deviation value.

It will be appreciated from the above description that the minimum deviation value compared in the first check (first cycle in which the block 160 is involved) is initially fixed (stored) for instance at a predetermined maximum value.

The block 170 is followed by the block 190, in which a check is performed on the minimum deviation value stored.

If the stored minimum deviation value is substantially equal to zero (occurrence of the predetermined condition, i.e. the value of the differential signal DIF is substantially equal to zero), the block 190 is followed by the block 200 in which the central control unit 20 obtains, via the circuit function FC(R) of the resistance R associated with the stored minimum deviation value, the measurement of the distance D of the object 2 from the distance measurement device 1 and supplies the measurement signal MIS to the display unit 22 via which the distance D of the object 2 is displayed.

If, however, the stored minimum deviation value is other than zero, the block 190 is followed by the block 180 in which it is checked whether the counter CONT has reached a maximum value N_{MAX}, i.e. if the relationship CONT<=N_{MAX} has occurred.

If not, i.e. if CONT>N_{MAX}, the block 180 is followed by the block 200 described above and, if so, i.e. if CONT<=N_{MAX}, the block 180 is followed by the block 210 in which the central control unit 20 causes, via the control signal COM, a new variation of the value of the resistance R of the resistor 13.

The central control unit 20 in particular varies the resistance R of the resistor 13 according to a binary search algorithm of known type.

The central control unit 20 is adapted, by means of the binary search algorithm, whenever necessary to determine a precise variation of the resistance R of the resistor 13 as a function of the positive or negative value of the differential signal DIF.

In other words, the binary search algorithm determines the variation of the resistance R of the resistor 13 as a function of the minimum deviation value, so as to reduce the value of the latter to a minimum.

The block 210 is followed by the block 150, in which the central control unit 20 again performs the cycle to detect the differential signal DIF, which is subsequently processed in the block 160 in which the stored minimum deviation value is compared with the difference between the value of the differential signal DIF detected and the value of the differential signal DIF associated with the predetermined circuit condition (DIF=0).

The distance measurement device 1 has the advantage that it is accurate, i.e. it is able to measure the distance of any object 2 irrespective of the reflective power of that object.

Lastly, the distance measurement device 1 has the advantage that it is of simple and economic construction.

It will be appreciated that modifications and variations may be made to the distance measurement device 1 as described and illustrated without thereby departing from the scope of the present invention.

The preliminary search circuit could in particular be omitted from the distance measurement device 1, i.e. it could be able to determine the distance by directly performing the closed loop control without a preliminary check for the presence or absence of the object 2.

## Claims

1. An optoelectronic distance measurement device (1) **characterised in that** it comprises:
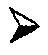 light transmission means (3) adapted to transmit a beam of light pulses in a predetermined direction;
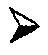 optoelectronic reception means (4) adapted to receive a beam of light pulses reflected by an object 2 and to supply as output a first and a second position signal (POS₁, POS₂) indicative of the distance D of the object (2) from the distance measurement device (1) ;
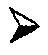 unbalancing means (5) adapted to receive as input the first and the second position signals (POS₁, POS₂) and able alternatively to amplify/attenuate the first and the second position signals (POS₁, POS₂) by means of the variation of a circuit parameter (R) carried out as a function of a control signal (COM) received as input;
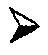 processing means (6) adapted to supply as output the control signal (COM) in order sequentially to vary the value of the circuit parameter (13) until a predetermined relationship between the first and the second position signals (POS₁, POS₂) is reached, the processing means (6) being adapted to supply as output a signal (MIS) indicating the distance (D) of the object obtained as a function of the value of the circuit parameter (R) that has caused the predetermined relationship between the first and the second position signals (POS₁, POS₂) to be reached.

2. An optoelectronic distance measurement device as claimed in claim 1, **characterised in that** the unbalancing means (5) comprise resistor means (13) having a variable resistive circuit parameter (R) whose value is controlled by the processing means (6) by means of the control signal (COM).

3. An optoelectronic distance measurement device as claimed in any one of the preceding claims, **characterised in that** the unbalancing means (5) comprise differential means (14) receiving as input the first and the second position signals (POS₁, POS₂) and adapted to process these first and second position signals (POS₁, POS₂) in order to supply to the processing means (6) a differential signal (DIF) defined by the difference between the first and second position signal (POS₁, POS₂).

4. An optoelectronic distance measurement device as claimed in claim 3, **characterised in that** the predetermined relationship is defined by the condition in which the differential signal (DIF) received as input from the processing means (6) has a value substantially equal to a predetermined value.

5. An optoelectronic distance measurement device as claimed in claim 3, **characterised in that** the predetermined relationship is defined by the condition in which the value of the differential signal (DIF) received as input from the processing means (6) is substantially equal to zero.

6. An optoelectronic distance measurement device as claimed in any one of the preceding claims, **characterised in that** the unbalancing means (5) comprise a first and a second amplification channel (15, 16).

7. An optoelectronic distance measurement device as claimed in claim 6, **characterised in that** it comprises preliminary search means (24) controlled by the processing means (6) and adapted to cancel out the contribution of the first or second amplification channel (15, 16) in order to enable the processing means (6) to process one of the two position signals (POS₁, POS₂) and solely to detect the presence or absence of an object (2).

8. An optoelectronic distance measurement device as claimed in claim 7, **characterised in that** the processing means (6) comprise first checking means (110) adapted, to detect the presence or absence of an object (2).

9. An optoelectronic distance measurement device as claimed in claim 8, **characterised in that** the processing means (6) comprise second checking means (190) adapted to check whether the predetermined condition has occurred.

10. An optoelectronic distance measurement device as claimed in any one of claims 2 to 9, **characterised in that** the processing means (6) comprise means (200) for calculating the distance (D) adapted to supply as output the measurement signal (MIS) determined as a function of the resistance (R) of the resistor means (13) which determines the predetermined condition.

11. An optoelectronic distance measurement device as claimed in any one of claims 2 to 10, **characterised in** 'that the processing means (6) are adapted to vary the resistance (R) of the resistor means (13) by means of a binary search algorithm.

12. An optoelectronic distance measurement device as claimed in any one of claims 2 to 11, **characterised in that** the unbalancing means (5) comprise amplification means (11).

13. An optoelectronic distance measurement device as claimed in any one of the preceding claims, **characterised in that** it comprises display means (22) receiving as input the measurement signal (MIS) in order to display the distance (D) of the object (2).

14. An optoelectronic distance measurement device as claimed in any one of claims 2 to 13, **characterised in that** the resistor means (13) are formed by a digital trimmer.

15. An optoelectronic distance measurement device as claimed in any one of the preceding claims, **characterised in that** the processing means (6) comprise synchronisation means (19) adapted to supply a synchronisation signal (CT) to the light transmission means (3) in order to command the transmission of the light beam.

16. An optoelectronic distance measurement device as claimed in any one of the preceding claims, **characterised in that** the optoelectronic reception means (4) are PSD photoreceivers.
